# EUROPÄISCHE PATENTSCHRIFT

(11) **EP 0 956 772 B1**
(45) Veröffentlichungstag und Bekanntmachung des Hinweises auf die Patenterteilung: **19.09.2001**
(21) Anmeldenummer: 98108499.9
(22) Anmeldetag: 11.05.1998
(51) Int. Cl.: A22C 11/00

(54) **Verfahren zur Herstellung einer ringförmigen Salami sowie eine nach dem Verfahren hergestellte Salami**
Method for manufacturing a ringshaped salami and salami made by this method
Procédé pour la fabrication d'un salami annulaire et salami fabriqué dans ce procédé

(43) Veröffentlichungstag der Anmeldung: 17.11.1999
(73) Patentinhaber: H. & E. Reinert Westfälische Privat-Fleischerei GmbH & Co. KG, 33775 Versmold (DE)
(72) Erfinder: Klemend, Uwe, 33739 Bielefeld (DE); Koch, Michael, 33790 Halle (DE); Lembke, Gunther H., 49186 Bad Iburg (DE)
(74) Vertreter: Stracke, Alexander, Dipl.-Ing.

(56) Entgegenhaltungen:
- EP-A- 0 183 601
- DE-A- 2 315 442
- DE-A- 2 406 090
- DE-A- 3 818 319
- US-A- 3 814 560

## Beschreibung

Die vorliegende Erfindung betrifft ein Verfahren zur Herstellung einer ringförmigen Salami sowie eine nach dem Verfahren hergestellte Salami.

Bei den bekannten gattunsgemäßen Salamis ist das Brät in einen Kunst- oder Naturdarm gefüllt. Zum Verzehr dieser Salami ist es jedoch erforderlich, den Darm zu entfernen. Vor allem die Handhabung ist dabei als nachteilig anzusehen.

Zwar gibt es Salamis, die ohne eine Umhüllung hergestellt sind, und bei denen der Edelschimmel direkt auf das Brät aufgeimpft ist, diese Salamis sind jedoch quaderförmig ausgebildet, was einige Nachteile mit sich bringt.
So ist deren Lagerung problematisch, da sie nur schichtweise aufeinandergelegt werden können.

Dokument DE 3 818 319 A1 beschreibt ein Verfahren zur herstellung einer geschlossenen Wurst, wobei die gut gekühlte und zerkleinerte Füllung in einen Naturdam gefüllt wird, dessen Ende über den Füllanfang der Wurst gesagen wird, um einen Wurstkranz zu fennen, und der anschließende Reifeprozess nach einer der Wurstsorte entsprechenden Vorschift erfolgt.

Abgesehen davon, daß eine für den Verkauf ansprechende Präsentation dieser Salamis praktisch nicht möglich ist, wird durch die schichtweise Lagerung auch eine sehr hohe Flächenpressung, vor allem der unteren Lagen erzeugt, die eine Beeinträchtigung, der Wurst mit sich bringt.
Diese Nachteile sind bei den bekannten runden Salamis nicht gegeben.

Der vorliegenden Erfindung liegt daher die Aufgabe zugrunde, ein Verfahren zu schaffen, durch das eine ringförmige Salami herstellbar ist, und eine Salami, die zum Verzehr einfacher zu handhaben ist.

Diese Aufgabe wird durch ein Verfahren gelöst, das die Merkmale des Anspruchs 1 aufweist.

Durch die erfindungsgemäße Kühlung des Bräts vor dem Verarbeiten auf -2 °C bis -6 °C, in Kombination mit einem Fleisch, das sich durch einen hohen Gehalt an intermuskulärem Bindegewebe auszeichnet, wird eine gleichmäßige Verteilung des Bindegewebes im Anschnitt des Ringes erreicht, so daß eine große gleichmäßige Oberfläche an der Verbindungsstelle der beiden Enden zur Verfügung steht. Hierdurch wird gewährleistet, daß im Verbindungsbereich beider Enden keine Nahtstelle zu erkennen ist. Überdies wird ein sicherer Verbund in diesem Bereich erreicht, so daß eine Auflösung der Naht praktisch ausgeschlossen ist.

Hierzu muß das Material die Gelbildung, die bei Rohwurst am isoelektrischen Punkt bei etwa pH 5,3 liegt und maßgeblich für die Festigkeit ("das Abbinden") ist, so gleichmäßig wie möglich darstellen können.

Die Gelbildung wird durch die eingebrachten Eiweiße aus den tierischen Geweben maßgeblich beeinflußt. Dabei neigen Eiweißfraktionen aus Bindegewebe, je nach ihren Anteilen, dazu, bei etwas niedrigeren pH-Werten (ca. 5,0 pH) festere Gele auszuprägen als Eiweißfraktionen aus Muskelgewebe.

Da durch das erfindungsgemäße Verfahren die Herstellung einer Salami möglich ist, die in ihrer Kontur sehr gleichmäßig ausgeprägt ist, ist diese Salami, im Gegensatz zu der bekannten, sowohl zu stapeln wie auch zu hängen. Hieraus ergeben sich Vorteile bei der Handhabung bzw. Präsentation der Salamis.
Zweckmäßigerweise erfolgt die Reifung der Salamis liegend auf Gittern. Das Aufbringen des Edelschimmels erfolgt durch direktes Aufimpfen auf das Brät.

Zum Verzehr dieser Salamis ist es nun nicht mehr erforderliche, zunächst einen umhüllenden Darm zu entfernen oder diesen gegebenenfalls mitzuessen.

Weitere vorteilhafte Ausgestaltungen der Erfindung sind in den Unteransprüchen gekennzeichnet.

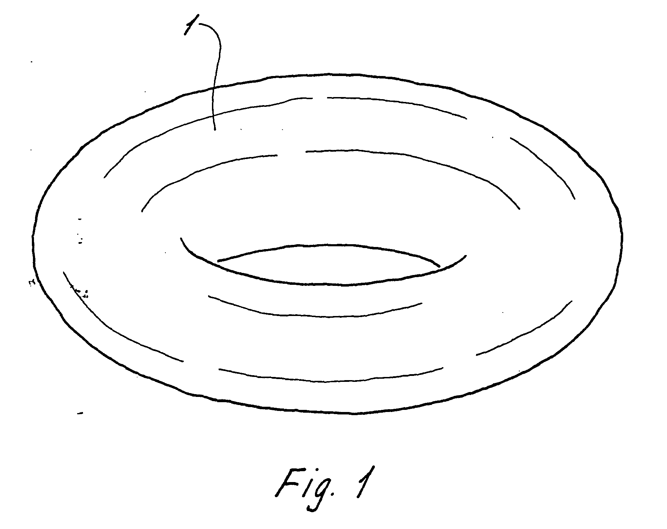

Das erfindungsgemäße Verfahren wird nachfolgend anhand der beigefügten Zeichnung beschrieben.

Die einzige Figur zeigt eine ringförmige Salami, die mit dem Bezugszeichen 1 versehen ist, in einer perspektivischen Ansicht.

Es ist zu erkennen, daß die Salami 1 einen nahtfreien Ring bildet und einen etwa kreisrunden Querschnitt aufweist. Dabei erfolgt die Formhaltung der Salami ausschließlich durch die inneren, feinen Strukturen des Bräts, die aufgrund ihrer größeren Oberfläche einen besseren Eiweißaufschluß erreichen.

Als besonders vorteilhaft hat sich herausgestellt, das Fleisch von ausgereiften Tieren zu verwenden, da hierbei die Ausprägung des Bindegewebes, im Gegensatz zu jungen Tieren, reifer ist und in erster Linie Eiweißfraktionen aus Bindegewebe aufweist, die in der Lage sind, am isoelektrischen Punkt feste Gele auszuprägen.

Zur Herstellung der Salami 1 wird erfindungsgemäß zunächst das Brät nach einem Zerkleinern auf -2 bis -6 °C gekühlt. Anschließend erfolgt ein Formen des portionierten Brätstranges zu einem Ring, der dadurch geschlossen wird, daß die beiden aneinanderliegenden Enden danach durch Verkneten miteinander verbunden werden.
Nach einer folgenden Vorreifüng im Klimarauch einer Klimarauchkammer, bei Temperaturen von 22 °C bis auf 17 °C sinkend, wodurch ein "Verölen" der Oberfläche verhindert wird, wird das Brät mit einem Edelschimmel geimpft, der unmittelbar auf die Oberfläche aufgebracht wird. Schließlich erfolgt eine Nachreifung in einem Klimaraum. Für den Transport sowie aus Hygieneschutzgründen wird die Salami schließlich in einem Griffschutz verpackt.

Zur Präsentation im Verkaufsraum kann die Salami gestapelt oder hängend angeboten werden.

## Patentansprüche

1. Verfahren zur Herstellung einer ringförmigen Salami, wobei das Brät nach einem Zerkleinern gekühlt, anschließend durch Formen des portionierten Brätstranges zu einem Ring geformt, danach im Nahtbereich durch Verkneten verbunden, nach einer folgenden Vorreifung mit einem direkt aufgebrachten Edelschimmel geimpft und schließlich in einem Klimaraum nachgereift wird.

2. Verfahren nach Anspruch 1, **dadurch gekennzeichnet, daß** die Vorreifung bei 22 bis 17 °C sinkend erfolgt.

3. Verfahren nach Anspruch 1, **dadurch gekennzeichnet, daß** das Brät nach dem Zerkleinern auf -2 bis -6 °C gekühlt wird.

4. Verfahren nach Anspruch 1, **dadurch gekennzeichnet, daß** die Salami nach der Nachreifung mit einem Griffschutz verpackt wird.

5. Nach dem Verfahren nach Anspruch 1 hergestellte Salami, für dessen Brät Fleisch mit einem hohen Gehalt an intermuskulärem Bindegewebe vorgesehen ist.

## Claims

1. A method for manufacturing a ring-shaped salami, wherein the roast is cooled after comminution, thereafter formed into a ring by forming the portioned string of roast, thereafter joined in the seam zone by kneading, and, after a subsequent preliminary ripening, inoculated with a directly applied cultivated mould and finally after-ripened in a climatic chamber.

2. A method as claimed in claim 1, **characterized in that** the preliminary ripening is carried out at 22 to 17°C decreasing.

3. A method as claimed in claim 1, **characterized in that** the roast is cooled after the comminution to -2 to -6°C.

4. A method as claimed in claim 1, **characterized in that** the salami is packaged with a handling protection after the after-ripening.

5. A salami produced according to the method according to claim 1, whose roast comprises meat with a high degree of intramuscular connective tissue.

6. A salami as claimed in claim 5, **characterized in that** the roast is provided with a fine structure.

## Revendications

1. Procédé de fabrication d'un saucisson de forme annulaire, dans lequel la chair est refroidie après fragmentation, puis est formée en un anneau, par formage d'une portion du boudin de chair, après quoi, elle est liée dans la zone du joint par pétrissage, puis après une prématuration elle est ensemencée avec une moisissure noble directement appliquée et est enfin soumise à une maturation complémentaire dans une chambre climatisée.

2. Procédé selon la revendication 1, **caractérisé en ce que** la prématuration s'effectue à une température qui décroît de 22 à 17 °C.

3. Procédé selon la revendication 1, **caractérisé en ce que** la chair est refroidie entre -2 et -6 °C, après fragmentation.

4. Procédé selon la revendication 1, **caractérisé en ce que** le saucisson est emballé, après maturation, avec une protection de prise.

5. Saucisson produit selon le procédé de la revendication 1, pour la chair duquel on prévoit de la viande à forte teneur en tissu conjonctif intramusculaire.

6. Saucisson selon la revendication 5, **caractérisé en ce que** la chair présente une structure fine.
